# EUROPÄISCHE PATENTSCHRIFT

(11) **EP 1 343 034 B1**
(45) Veröffentlichungstag und Bekanntmachung des Hinweises auf die Patenterteilung: **11.05.2005**
(21) Anmeldenummer: 03004045.5
(22) Anmeldetag: 25.02.2003
(51) Int. Cl.: G02B 6/25

(54) **Verfahren und Vorrichtung zur Herstellung eines Lichtwellenleiterendes**
Process and device for manufacturing an optical waveguide end
Procédé et dispositif pour la fabrication d'une extrémité d'un guide d'onde optique

(30) Priorität: 05.03.2002 DE 10209461
(43) Veröffentlichungstag der Anmeldung: 10.09.2003
(73) Patentinhaber: Bernhard Schäfer Werkzeug- u. Sondermaschinen GmbH, 76669 Bad Schönborn-La (DE)
(72) Erfinder: Neubauer, Stefan, 67166 Otterstadt (DE); Woll, Matthias, 76684 Östringen (DE)
(74) Vertreter: Moldenhauer, Herbert, Dipl.-Ing.

(56) Entgegenhaltungen:
- GB-A- 1 604 957
- US-A- 3 819 442
- US-A- 4 176 909
- US-A- 5 208 977
- US-A- 5 269 206

## Beschreibung

### Technisches Gebiet

Die Erfindung befasst sich mit einem Verfahren und einer Vorrichtung zur Herstellung eines mit einer für Lichtwellen durchlässigen Stirnfläche versehenen Lichtwellenielterendes für die Anbringung einer Ferrule, bei dem die Stirnfläche durch Durchtrennen des Lichtwellenleiters und mechanischer Bearbeitung gebildet wird und der Lichtwellenleiter im Bereich seines Endabschnitts von seinem Außenmantel befreit wird, der den Lichtwellenleiter außenseitig ganz umschließt.

Für die Verbindung von zwei Lichtwellenleiterenden sind die Stirnflächen der lichtleitenden Faser sehr genau in Position zu bringen und dort zu halten. Sowohl in radialer als auch in axialer Richtung sind die Stirnflächen exakt zueinander zu positionieren. Für die Steckverbindungen werden sogenannte Ferrule benutzt, die auf das Ende eines Lichtwellenleiters aufgesetzt werden. Dabei muß die Befestigung der Ferrule auf dem Lichtwellenleiterende zugfest sein, ohne dass dabei der Lichtwellenleiter beschädigt wird oder seine optischen Eigenschaften beeinflusst werden.

Die Stirnflächen der Lichtwellenleiterenden müssen sehr genau endbearbeitet sein.

### Stand der Technik

In der DE 199 19 428 A1, die sich mit der Befestigung einer Ferrule an einem Mantel eines Lichtwellenleiters befasst, wird unter anderem auch auf die Endbearbeitung der Stirnfläche des Lichtwellenleiters hingewiesen. Diese Endbearbeitung erfolgt nachdem das fertig bearbeitete Endstück des Lichtwellenleiters schon mit einer Ferrule versehen ist. Die danach folgende Endbearbeitung gestaltet sich jedoch schwierig und aufwändig.

### Darstellung der Erfindung

Der Erfindung liegt die Aufgabe zugrunde, eine einfachere Möglichkeit für die Herstellung einer exakten Stirnfläche an einem Lichtwellenleiterende zu finden, die außerdem eine hohe Stückzahl in kürzester Zeit ermöglicht.

Die Lösung der gestellten Aufgabe wird mit den Merkmalen der Ansprüche 1 und 8 erreicht. Die Unteransprüche 2 bis 7 sowie 9 bis 11 stellen vorteilhafte Ausgestaltungen der Erfindung dar.

Bei dem erfindungsgemäßen Verfahren wird der Lichtwellenleiter durchtrennt und dabei gleichzeitig die mechanische Bearbeitung der Stirnfläche durchgeführt. Sodann wird in einem vorgegebenen Endabschnitt des Lichtwellenleiters sein Außenmantel durchtrennt und von dem Lichtwellenleiter abgezogen.

Für das Durchtrennen des Lichtwellenleiters und die Feinbearbeitung seiner Stirnfläche wird bevorzugt ein Säge-Schleifblatt verwendet. Mit einem solchen Säge-Schleifblatt kann der Lichtwellenleiter durchtrennt und gleichzeitig seine Stirnflächen geschliffen werden. Als Säge-Schleifblatt wird bevorzugt eine diamantbestückte Scheibe verwendet.

Mit Hilfe eines Formmessers wird der Außenmantel des Lichtwellenleiters in einem vorgegebenen Endabschnitt durchtrennt und dann vom Lichtwellenleiter abgezogen. Das Abziehen des Endabschnitts des Außenmantels wird durch eine Relativbewegung von Formmesser und Spanneinrichtung für den Lichtwellenleiter bewirkt. Dabei ist es günstig, wenn die den Lichtwellenleiter haltende Spanneinrichtung eine Rückwärtsbewegung durchführt und dabei durch das Formmesser der Endabschnitt des Außenmantels vom Lichtwellenleiter abgestreift wird.

Um eine möglichst hohe Taktzahl zu erreichen, wird von einem endlos ausgebildeten Lichtwellenleiter ein Abschnitt vorbestimmter Länge abgezogen und abgelängt. Dabei werden die beim Ablängen erzeugten Stirnflächen gleichzeitig endbearbeitet und die einander gegenüberliegenden Endabschnitte des Außenmantels gleichzeitig von beiden Lichtwellenlleiterenden abgezogen.

Die Vorrichtung zur Durchführung des Verfahrens ist mit einer Klemmeinrichtung zum Festklemmen des Lichtwellenleiters, einem Trennwerkzeug für das Durchtrennen des Lichtwellenleiters quer zu seiner Längsrichtung, die gleichzeitig die Endbearbeitung der Stirnflächen durchführen kann und einem Formmesser, für das Durchtrennen des Außenmantels des Lichtwellenleiters versehen. Das Trennwerkzeug ist mit zwei parallel zueinander verlaufenden Seitenflächen versehen, die für die Endbearbeitung der Stirnflächen geeignet sind und an den Stirnflächen entlangführbar sind. Bevorzugt wird das Trennwerkzeug durch ein Fräs- und oder Schleifwerkzeug gebildet. Dieses Trennwerkzeug ist quer zur Längsrichtung des Lichtwellenleiters hin- und her bewegbar. Weiterhin hat die Vorrichtung eine kombinierte Förder- und Spanneinrichtung für die Längsbewegung des Lichtwellenleiters, die mit der den Lichtwellenleiter festhaltenden Klemmeinrichtung mit Trennwerkzeug und Schneidmesser zusammenwirkt.

### Kurzbeschreibung der Zeichnung

Anhand eines in der Zeichnung dargestellten Ausführungsbeispiels wird die Erfindung nachstehend näher erläutert.

Es zeigt in schematischer Darstellung:
- Fig. 1: die wesentlichen Teile der Vorrichtung in ihrer Grundstellung,
- Fig. 2: die Vorrichtung mit eingeführtem und eingespanntem Lichtwellenleiter,
- Fig. 3: den Durchtrennvorgang mit gleichzeitiger Bearbeitung der Stirnflächen,
- Fig. 4: das Durchschneiden des Außenmantels,
- Fig. 5: die Freigabe des Lichtwellenleiters durch die Spanneinrichtung und
- Fig. 6: das Abziehen des Endabschnitts des Außenmantels vom Lichtwellenleiter

### Ausführung der Erfindung

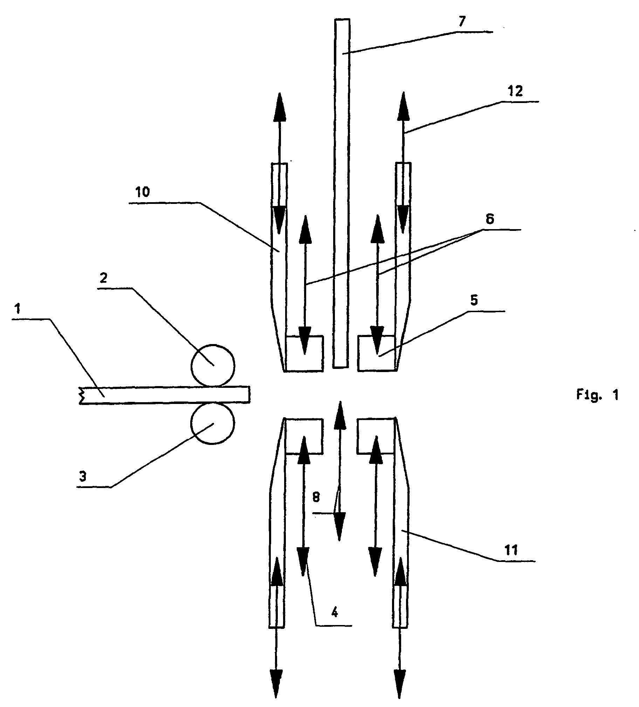

In den Figuren 1 bis 6 ist das Verfahren anhand der wesentlichen benötigten Maschinenteile schematisch dargestellt. Durch die eingefügten Pfeile ist die Bewegungsrichtung der einzelnen Teile beziehungsweise des Lichtwellenleiters angezeigt. Im Ausführungsbeispiel ist die Vorrichtung spiegelbildlich ausgeführt, so dass gleichzeitig zwei Lichtwellenleiterenden hergestellt werden. In der Fig. 1 ist die Vorrichtung in ihrer Grundstellung dargestellt. Der Lichtwellenleiter 1 ist in der kombinierten Förder- und Spanneinrichtung 2 gehalten und kann für den Durchtrenn- und Bearbeitungsvorgang nach rechts in die Klemm- und Schneidteile der Vorrichtung eingeschoben werden. Für das Festklemmen des Lichtwellenleiters 1 sind die Klemmbacken 4 und 5 vorgesehen. Die Klemmbacken 4 und 5 sind wie mit den Pfeilen 6 angedeutet, quer zum Lichtwellenleiter 1 zu bewegen. Zwischen den Klemmbacken 4 und 5 ist das Trennwerkzeug 7 vorhanden, welches gemäß Pfeil 8 quer zum Lichtwellenleiter 1 bewegt werden kann. Unmittelbar neben den Klemmbacken 4 und 5 sind die Schneidmesser 10 und 11 vorhanden, welche, wie mit den Pfeilen 12 angezeigt, in Richtung auf den Lichtwellenleiter 1 hin- und her bewegt werden können. Auf der rechten Seite der Figur ist eine zweite Förder- und Spanneinrichtung 13 für die Aufnahme des Lichtwellenleiters 1 vorhanden.

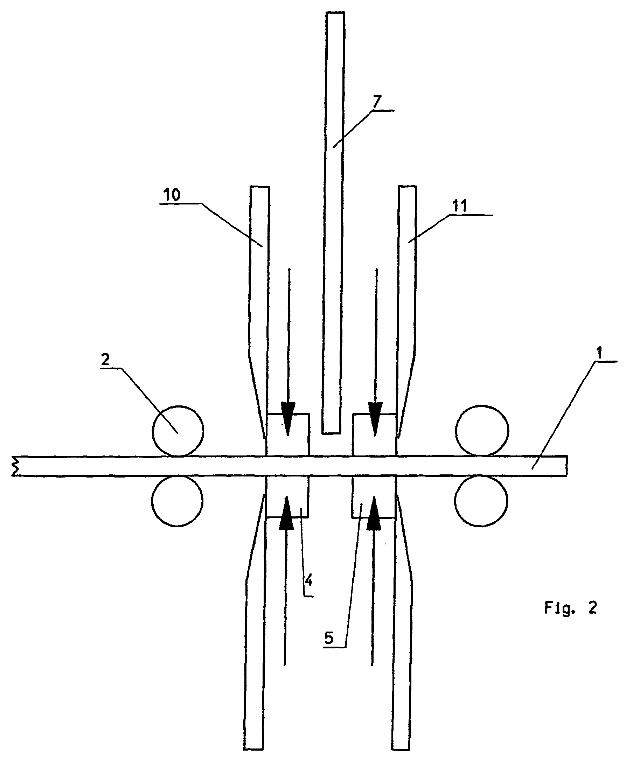

In der Fig. 2 ist der Lichtwellenleiter 1 mittels der Förder- und Spanneinrichtungen 2 und 13 in vorgegebener Länge in die Vorrichtung eingeführt. Die Klemmbacken 4 und 5 sind geschlossen und liegen fest am Lichtwellenleiter 1 an. Dadurch wird der Lichtwellenleiter 1 in einer vorgegebenen Lage fest in der Vorrichtung gehalten. Säge- und Schleifblatt 7 sowie die Schneidmesser 1,11 sind noch in ihrer Ausgangsposition.

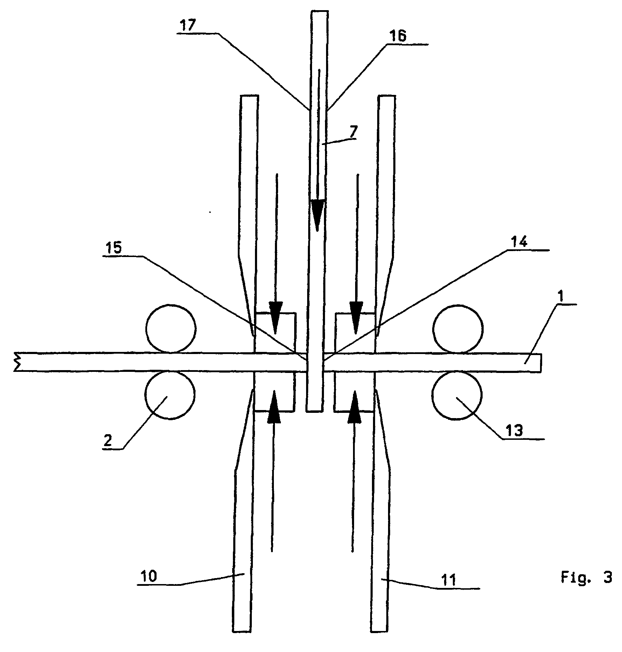

In der Fig. 3 wird das Durchtrennen des Lichtwellenleiters mit dem Trennwerkzeug 7 mit gleichzeitiger Feinbearbeitung der durch das Durchtrennen entstehenden Stirnflächen 14 und 15 vollzogen. Als Trennwerkzeug 7 wird ein Säge-Schleifblatt verwendet, welches auf seinen Seitenflächen 16 und 17 mit Diamanten bestückt ist. Während dieses Vorgangs wird der Lichtwellenleiter 1 durch die Klemmeinrichtung aus den Klemmbacken 4 und 5 gehalten. Die Formmesser 10 und 11 sind weiterhin in ihrer Ausgangslage.

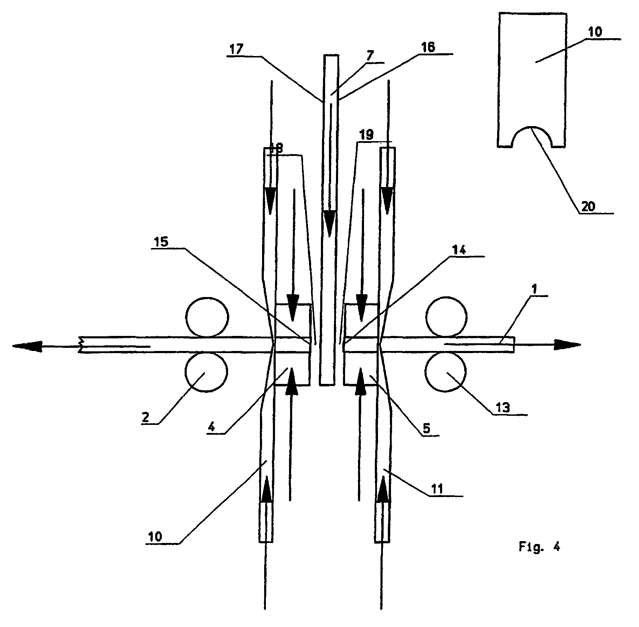

In der Fig. 4 sind die Formmesser 10 und 11 eingefahren und der Außenmantel des Lichtwellenleiters durchtrennt. Für diesen Vorgang sind die Klemmbacken 4 und 5 mitsamt den Spanneinrichtungen 2 und 13 sowie den Formmessern 10 und 11 nach außen gerückt, so dass Freiräume 18 und 19 zwischen den Stirnflächen 14 und 15 und der jeweiligen Seitenfläche 16 und 17 des Trennwerkzeugs 7 entstehen. Auf der linken Seite der Figur ist eine Seitenansicht eines Trennmessers 10 gezeigt. Die Schneidkante 20 des Trennmessers 10 ist halbkreisförmig ausgebildet mit einem Durchmesser, welcher dem Außendurchmesser des Innenmantels des Lichtwellenleiters 1 entspricht, so dass beim Zusammenschieben von zwei Trennmessern 10 bzw. 11 der Außenmantel des Lichtwellenleiters 1 völlig durchtrennt wird.

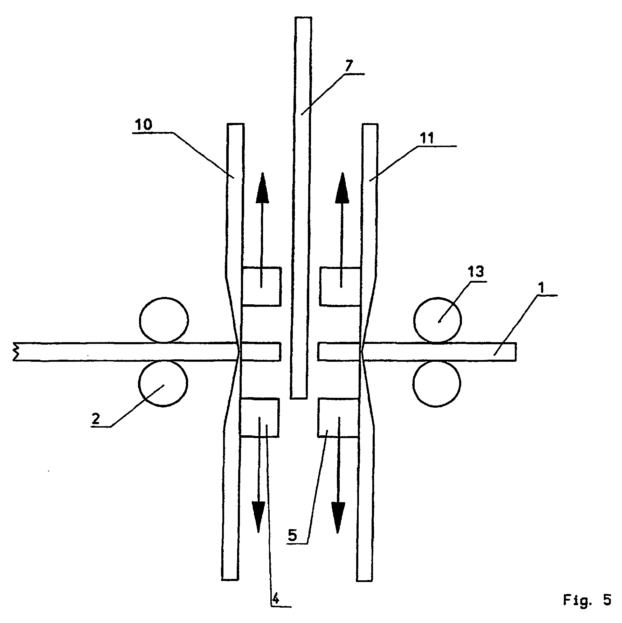

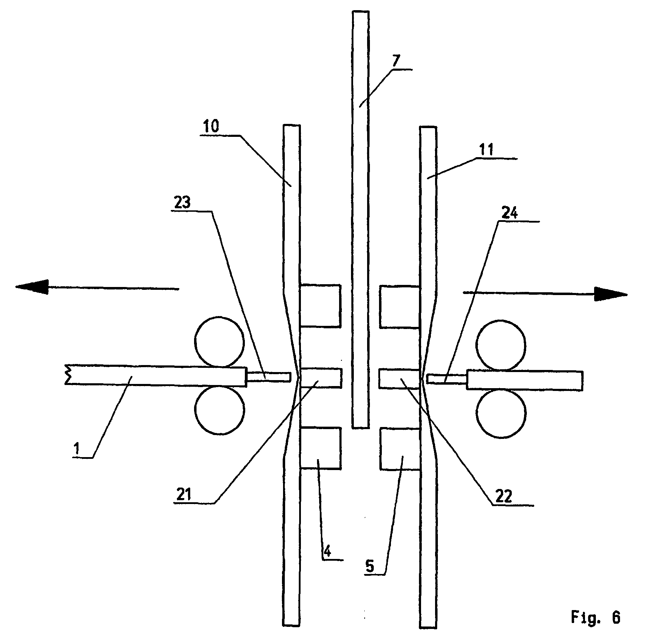

Die Fig. 5 zeigt den nächsten Verfahrensschritt, bei dem die Klemmbacken 4 und 5 der Klemmeinrichtung geöffnet werden. Anschließend wird, wie in Fig. 6 dargestellt, der Lichtwellenleiter 1 auf jeder Seite der Vorrichtung nach außen gezogen, wodurch die Endabschnitte 21 und 22 des Außenmantels, die durch die geschlossenen Formmesser 10 und 11 gehalten werden, von den Lichtwellenleiterenden 23 und 24 abgestreift werden.

## Patentansprüche

1. Verfahren zur Herstellung eines mit einer für Lichtwellen durchlässigen Stirnfläche versehenen lichtwellenleiters für die Anbringung einer Ferrule, bei dem die Stirnfläche durch Durchtrennen des Lichtwellenleiters unter mechanischer Bearbeitung gebildet wird und der Lichtwellenleiter im Bereich eines Endabschnitts von seinem Außenmantel befreit wird, der den Lichtwellenleiter außenseitig ganz umschließt, **dadurch gekennzeichnet, dass** das Durchtrennen des Lichtwellenleiters (1) und das mechanische Bearbeiten der Stirnflächen (14,15) als ein in sich geschlossener Arbeitsschritt ausgeführt wird, der zugleich das Durchtrennen des Lichtwellenleiters und die Feinbearbeitung der hierbei erhaltenen Stirnflächen (14,15) beinhaltet und dass das Entfernen der Außenmäntel (21,22) im Bereich der Endabschnitte (23,24) im Anschluss an diesen Arbeitsschritt vollzogen wird.

2. Verfahren nach Anspruch 1 **dadurch gekennzeichnet, dass** für das Durchtrennen des Lichtwellenleiters (1) und die Feinbearbeitung der Stirnflächen (14,15) ein Säge-Schleifblatt (7) verwendet wird, das auf seinen Seitenflächen eine Beschichtung zum Schleifen der Stimflächen (14,15) hat.

3. Verfahren nach Anspruch 2, **dadurch gekennzeichnet, dass** als Säge-Schleifblatt (7) eine diamantbestückte Scheibe verwendet wird.

4. Verfahren nach Anspruch 1 bis 3, **dadurch gekennzeichnet, dass** die Endabschnitte der Außenmäntel (21,22) mittels eines Formmessers (10,11) von den übrigen Außenmänteln abgetrennt und nachfolgend von den Lichtwellenleitern abgezogen werden.

5. Verfahren nach Anspruch 4, **dadurch gekennzeichnet, dass**, dass das Abziehen der Endabschnitte der Außenmäntel durch eine parallel zu dem Lichtwellenleiter (1) gerichtete Relativbewegung der Formmesser (10, 11) und einer Spanneinrichtung (2, 13) für den Lichtwellenleiter (1) bewirkt wird.

6. Verfahren nach Anspruch 4, **dadurch gekennzeichnet, dass** das Abziehen des Außenmantels durch eine Rückwärtsbewegung der den Lichtwellenleiter (1) haltenden Spanneinrichtung (2,13) bewirkt wird.

7. Vorrichtung zur Durchführung des Verfahrens nach einem der Ansprüche 1 bis 6, umfassend zumindest eine Klemmeinrichtung, eine Trennwerkzeug und Mittel zum Entfernen des Außenmantels im Bereich eines Endabschnitts von dem Lichtwellenleiter, **dadurch gekennzeichnet, dass** das Trennwerkzeug (7) quer zur Längsrichtung des Lichtwellenleiters (1) bewegbar ist und parallele Seitenflächen hat, die an den Stirnflächen entlangführbar sind.

8. Vorrichtung nach Anspruch 7, **dadurch gekennzeichnet, dass** das Trennwerkzeug (7) durch ein Fräs- und/oder Schleifwerkzeug gebildet ist.

9. Vorrichtung nach Anspruch 7 oder 8, **dadurch gekennzeichnet, dass** das Trennwerkzeug (7) quer zur Längsrichtung des Lichtwellenleiters (1) hin und her bewegbar ist.

10. Vorrichtung nach Anspruch 7 bis 9, **dadurch gekennzeichnet, dass** die Vorrichtung eine kombinierte Förder- und Spanneinrichtung (2, 13) für die Längsbewegung des Lichtwellenleiters (1) sowie eine den Lichtwellenleiter (1) festhaltende Klemmeinrichtung (4,5) mit Trennwerkzeug (7) und Schneidmesser (10, 11) hat.

## Claims

1. A method of producing an optical waveguide, provided with an end face permeable to light waves, for the attachment of a ferrule, in which method the end face is formed by the severing of the optical waveguide with the end face being machined, and the optical waveguide is freed of its outer sheath in the region of an end section, this outer sheath entirely enclosing the optical waveguide on the outside, **characterized in that** the severing of the optical waveguide (1) and the machining of the end faces (14, 15) are carried out in a self-contained working step which comprises both the severing of the optical waveguide and the fine machining of the end faces (14, 15) obtained in the process, and **in that** the removal of the outer sheaths (21, 22) in the region of the end sections (23, 24) is completed following this working step.

2. A method according to claim 1, **characterized in that** a saw blade/abrasive disc (7) which has a coating on its side faces for grinding the end faces (14, 15) is used for the severing of the optical waveguide (1) and the fine machining of the end faces (14, 15).

3. A method according to claim 2, **characterized in that** the saw blade/abrasive disc (7) used is a disc set with diamonds.

4. A method according to any of claims 1 to 3, **characterized in that** the end sections of the outer sheaths (21, 22) are cut off from the rest of the outer sheaths by means of a form blade (10, 11) and are subsequently pulled off the optical waveguides.

5. A method according to claim 4, **characterized in that** the end sections of the outer sheaths are pulled off by a relative movement, directed parallel to the optical waveguide (1), of the form blades (10, 11) and of a gripping device (2, 13) for the optical waveguide

6. A method according to claim 4, **characterized in that** the outer sheath is pulled off by a backward movement of the gripping device (2, 13) holding the optical waveguide (1).

7. An apparatus for carrying out the method according to any one of claims 1 to 6, comprising at least one clamping device, a cut-off tool and means for removing the outer sheath in the region of an end section from the optical waveguide, **characterized in that** the cut-off tool (7) can be moved transversely to the longitudinal direction of the optical waveguide (1) and has parallel side faces which can be guided along the end faces.

8. An apparatus according to claim 7, **characterized in that** the cut-off tool (7) is formed by a milling and/or grinding tool.

9. An apparatus according to claim 7 or 8, **characterized in that** the cut-off tool (7) can be moved back and forth transversely to the longitudinal direction of the optical waveguide (1).

10. An apparatus according to any of claims 7 to 9, **characterized in that** the apparatus has a combined conveying and gripping device (2, 13) for the longitudinal movement of the optical waveguide (1) and a clamping device (4, 5), holding the optical waveguide (1) in position, with cut-off tool (7) and cutting blades (10, 11).

## Revendications

1. Procédé de fabrication d'un guide d'ondes lumineuses muni d'une surface frontale transparente aux ondes lumineuses en vue de l'ajout d'une virole, la surface frontale étant formée par la coupe du guide d'ondes lumineuses avec usinage mécanique et le guide d'ondes lumineuses étant libéré de son enveloppe extérieure dans la zone d'une extrémité, laquelle enveloppe entoure complètement à l'extérieur le guide d'ondes lumineuses, **caractérisé en ce que** la coupe du guide d'ondes lumineuses (1) et l'usinage mécanique des surfaces frontales (14, 15) sont exécutés comme une étape de travail autonome qui contient en même temps la coupe du guide d'ondes lumineuses et le finissage des surfaces frontales (14, 15) alors obtenues et **en ce que** l'enlèvement des enveloppes extérieures (21, 22) dans la zone des extrémités (23, 24) est effectué à la suite de cette étape de travail.

2. Procédé selon la revendication 1, **caractérisé en ce que**, pour la coupe du guide d'ondes lumineuses (1) et pour le finissage des surfaces frontales (14, 15), on utilise une scie à feuilles abrasives (7) qui a sur ses surfaces latérales un revêtement pour rectifier les surfaces frontales (14, 15).

3. Procédé selon la revendication 2, **caractérisé en ce que** l'on utilise comme scie à feuilles abrasives (7) un disque garni de diamants.

4. Procédé selon l'une des revendications 1 à 3, **caractérisé en ce que** les extrémités des enveloppes extérieures (21, 22) sont séparées des enveloppes extérieures restantes au moyen d'une lame profilée (10, 11) et sont ensuite enlevées des guides d'ondes lumineuses.

5. Procédé selon la revendication 4, **caractérisé en ce que** l'enlèvement des extrémités des enveloppes extérieures est provoqué par un mouvement relatif, parallèle au guide d'ondes lumineuses (1), de la lame profilée (10, 11) et d'un dispositif de serrage (2, 13) destiné au guide d'ondes lumineuses (1).

6. Procédé selon la revendication 4, **caractérisé en ce que** l'enlèvement de l'enveloppe extérieure est provoqué par un mouvement de recul du dispositif de serrage (2, 13) tenant le guide d'ondes lumineuses (1).

7. Dispositif pour la mise en oeuvre du procédé selon l'une des revendications 1 à 6, comprenant au moins un dispositif de serrage, un outil à tronçonner et des moyens pour enlever l'enveloppe extérieure du guide d'ondes lumineuses dans la zone d'une extrémité, **caractérisé en ce que** l'outil à tronçonner (7) est mobile transversalement par rapport à la direction longitudinale du guide d'ondes lumineuses (1) et comporte des surfaces latérales parallèles qui peuvent être guidées le long des surfaces frontales.

8. Dispositif selon la revendication 7, **caractérisé en ce que** l'outil à tronçonner (7) est formé par un outil à fraiser et/ou à rectifier.

9. Dispositif selon la revendication 7 ou 8, **caractérisé en ce que** l'outil à tronçonner (7) est mobile en va-et-vient transversalement par rapport à la direction longitudinale du guide d'ondes lumineuses (1).

10. Dispositif selon l'une des revendications 7 à 9, **caractérisé en ce que** le dispositif comporte un dispositif combiné de transport et de serrage (2, 13) pour le mouvement longitudinal du guide d'ondes lumineuses (1) ainsi qu'un dispositif de serrage (4, 5) maintenant le guide d'ondes lumineuses (1) et comprenant outil à tronçonner (7) et lame de coupe (10,11).
